(19) Europäisches Patentamt
European Patent Office
Office européen des brevets

(11) **EP 2 640 108 A1**

(12) **EUROPÄISCHE PATENTANMELDUNG**

(43) Veröffentlichungstag:
**18.09.2013   Patentblatt 2013/38**

(51) Int Cl.:
*H04W 16/14* (2009.01)     *H04W 16/16* (2009.01)
*H04W 16/20* (2009.01)

(21) Anmeldenummer: **12159839.5**

(22) Anmeldetag: **16.03.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Deutsche Telekom AG**
**53113 Bonn (DE)**

(72) Erfinder:
• **Rosenberger, Manfred**
**66424 Homburg (DE)**

• **Arnold, Paul**
**60389 Frankfurt/Main (DE)**
• **Bleicher, Zarah**
**70563 Stuttgart (DE)**
• **Belschner, Jakob**
**60322 Frankurt/Main (DE)**

(74) Vertreter: **Vossius & Partner**
**Siebertstrasse 4**
**81675 München (DE)**

(54) **Verfahren und Einrichtung zur Zuweisung von Funkressourcen in einem heterogenen Mobilfunknetz**

(57)    Ein Verfahren zur Zuweisung von Funkressourcen in einem heterogenen Mobilfunknetz umfasst (i) ein Aufteilen von im heterogenen Mobilfunknetz vorhandenen Funkressourcen in eine Mehrzahl von Ressourcenpatterns, wobei die Mehrzahl von Ressourcenpatterns zusammen einen Ressourcenpool bildet; (ii) ein Definieren eines Ressourcensets einer Basisstation des heterogenen Mobilfunknetzes als Untermenge des Ressourcenpools; (iii) ein Bestimmen eines Nutzwertes für jedes Ressourcenpattern des Ressourcensets als Maß eines zu erwartenden Datendurchsatzes des zugehörigen Ressourcenpatterns; (iv) ein Vorauswählen mindestens eines Ressourcenkandidaten aus dem Ressourcenset, wobei dazu die Nutzwerte der Ressourcenpatterns des Ressourcensets ausgewertet werden; (v) eine Neuauswahl zu konfigurierender Ressourcenpattern auf der Grundlage des vorausgewählten mindestens einen Ressourcenkandidaten; und (vi) ein Konfigurieren der Basisstation des heterogenen Mobilfunknetzes mit den neu ausgewählten Ressourcenpattern. Diese Verfahren ermöglicht eine effiziente Koordinierung von Interferenzen im heterogenen Mobilfunknetz.

Fig. 1

EP 2 640 108 A1

**Beschreibung**

Technisches Gebiet

Die Erfindung betrifft ein Verfahren und eine Einrichtung zur Zuweisung von Funkressourcen in einem heterogenen Mobilfunknetz. Solche Verfahren und Einrichtungen können zur Koordinierung von Interferenzen im heterogenen Mobilfunknetz eingesetzt werden.

Stand der Technik

In einem heterogenen Mobilfunknetz werden in die Versorgungsgebiete bestehender Makro-Basisstationen (MBS) zusätzliche Basisstationen (BS) mit deutlich geringerer Sendeleistung, so genannte "low-power" Basisstationen (LBS), platziert. Sie dienen der Versorgung kleiner und kleinster Gebiete mit erhöhtem Datenverkehrsaufkommen, weshalb sie auch als Pico- oder Femto-Basisstationen bezeichnet werden. Auch zur Abdeckung kleinerer Versorgungslücken oder zur Verbesserung der Hausinnenversorgung werden LBS eingesetzt.

Alle LBS mit vergleichbaren Sendeleistungen bilden gemeinsam einen Layer des heterogenen Netzes. Jeder einzelne Layer bildet für sich ein homogenes Netz. In einem heterogenen Netz sind immer mehrere Layer gleichzeitig vorhanden, wie zum Beispiel ein Makro-, ein Pico- und ein Femtolayer. Folglich sind heterogene Mobilfunknetze immer auch hierarchische Netze, in denen der Makrolayer entsprechend der höchsten Sendeleistung den höchsten Layer darstellt. Eine Kategorisierung von LBS und eine Beschreibung weiterer Anwendungsszenarien findet man beispielsweise in [1].

Für ein heterogenes Mobilfunknetz ist im Allgemeinen bezeichnend, dass Übertragungssignale nicht nur mit denen des gleichen Layers interferieren können, sondern auch mit denen anderer Layer. Diese Interferenzen zu verringern oder ihre Auswirkungen zu reduzieren ist Ziel der Interferenzkoordination.

Wird jedem Layer ein separater Frequenzbereich zugeordnet, vereinfacht sich das Problem der Interferenzkoordination wesentlich, da zwischen den Layern keine Interferenz mehr auftritt. Statt eines einzelnen heterogenen Netzes koordiniert man in diesem Fall mehrere unabhängige homogene Netze. Jedoch führt ein solcher Ansatz zu einer deutlich geringeren Datenrate per Layer, da die damit verbundene Reduktion der Funkressourcen durch die verbesserte Interferenzsituation nicht kompensiert werden kann. Deshalb wird für folgende Betrachtungen davon ausgegangen, dass alle Layer den identischen Frequenzbereich nutzen.

Heterogene Netze erlauben es, sukzessive, je nach Bedarf, Übertragungskapazitäten durch Hinzufügen zusätzlicher Basisstationen in ein bestehendes Mobilfunknetz einzubringen. Gleichzeitig ändert sich jedoch mit jeder hinzugefügten BS auch die Interferenzsituation im Netz. So können sich dann den Signalen eines Layers Interferenzstörungen durch Signale anderer Layer überlagern, die um mehrere 10 dB stärker sein können. Solche extremen Interferenzsituationen treten vor allem dann auf, wenn es einer Mobilstation (MS) nicht gestattet ist, eine Verbindung zu der am stärksten zu empfangenden BS aufzubauen. Ein Grund dafür kann zum Beispiel sein, dass eine MS nicht Mitglied einer geschlossenen Nutzergruppe beziehungsweise Closed Subscriber Group (CSG) einer Heimbasisstation (HBS) ist. Eine HBS ist dabei eine Femto-Basisstation, die vom Endkunden für den Heimgebrauch aufgestellt und in Betrieb genommen wird. Die Konfiguration der geschlossenen Nutzergruppe der HBS erfolgt durch den Endkunden. Ein anderer solcher Grund kann beispielsweise sein, dass falls sich eine MS verhältnismäßig schnell durch ein Versorgungsgebiet einer LBS bewegt, würde die Verweildauer innerhalb der Zelle nur sehr kurz sein. Ein Wechsel beziehungsweise Handover zur LBS kann deshalb aus Gründen der Effizienz der MS untersagt werden. Durchquert die MS nacheinander mehrere LBS-Zellen, kann diese Interferenzsituation für die MS auch über eine längere Zeitdauer bestehen bleiben.

Um eine zuverlässige und kontinuierliche Versorgung aller MS gewährleisten zu können, sollte die Interferenzkoordination in einem heterogenen Mobilfunknetz es ermöglichen, dass eine MS sich bei Bedarf stets noch mit einer BS eines höheren Layers, also zumindest mit einer MBS, verbinden kann.

Die Interferenzsituation in einem heterogenen Mobilfunknetz ist zumeist verhältnismäßig wechselhaft. Eine mögliche Ursache dafür kann zum Beispiel sein, dass sich bedingt durch die verhältnismäßig geringe Sendeleistung der LBS auch verhältnismäßig kleine Versorgungsgebiete ergeben. Die Anzahl der mit der LBS verbundenen MS und damit die Last in der Zelle kann daher verhältnismäßig stark schwanken, was sich wiederum auf die Interferenzsituation benachbarter Zellen auswirken kann. Eine weitere mögliche Ursache dafür kann sein, dass HBS zudem vom Endkunden beliebig an- oder ausgeschaltet werden sowie dass sie auch jederzeit von ihm neu positioniert werden können. Eine andere weitere mögliche Ursache dafür kann sein, dass Basisstationen zum Beispiel aus Gründen der Energieeffizienz zeitweise ausgeschaltet sein können. Eine andere weitere mögliche Ursache dafür kann sein, dass portable LBS nur für eine begrenzte Zeitdauer zum Einsatz kommen, wie zum Beispiel bei einem Open-Air-Konzert oder im Katastrophenfall.

In heterogenen Mobilfunknetzen mit verhältnismäßig dynamischen Interferenzsituationen kommen daher typischerweise auch nur dynamische Verfahren zur Interferenzkoordinierung in Frage. Ist die Anzahl der beteiligten Basisstationen zudem sehr hoch, wie zum Beispiel für HBS, oder will man bestehende Basisstationen ohne Änderung ihrer Konfiguration weiterhin betreiben, sollten nur Verfahren eingesetzt werden, die auch ohne jegliche Kommunikation zwischen den beteiligten Basisstationen auskommen.

Dynamische Verfahren zur Interferenzkoordinierung in heterogenen Mobilfunknetzen sind für den Fall der Koexistenz von Makro- und Heimbasisstationen mit geschlossenen Nutzergruppen beziehungsweise CSG entwickelt worden. In [2] und [3] erfolgt die Koordination im Frequenzbereich, indem die zur Verfügung stehende Bandbreite in zwei oder mehrere Abschnitte, sogenannte Subbänder, unterteilt wird. Verwendet eine MBS, wie in [2] vorgeschlagen, jedoch nicht die gesamte Bandbreite, führt dies zu einer Reduktion des Zelldurchsatzes, wenn sich bereits eine einzige HBS im Versorgungsgebiet der MBS befindet. Die in [3] beschriebene Methode erlaubt zwar jeder MBS, die gesamte Bandbreite zu nutzen, berücksichtigt jedoch nicht die Interferenz innerhalb des HBS-Layers. In [4] werden anstelle von Subbändern mehrere schmalbandige Sendesignale beziehungsweise Component Carriers (CC) verwendet, um eine Koordination im Frequenzbereich zu realisieren. Damit Ressourcen mehrerer CC einer MS zugeordnet werden können, muss diese in der Lage sein, im Downlink mehrere Empfangssignale gleichzeitig auszuwerten und im Uplink mehrere Sendesignale gleichzeitig zu erzeugen (sogenannte Carrier Aggregation). Alle beteiligten Basisstationen müssen zudem das Konzept der Component Carriers unterstützen. Ferner muss die Information über die Auswahl der genutzten CC zwischen den Basisstationen ausgetauscht werden. Auch muss sichergestellt sein, dass die für jede BS spezifischen Matrizen zur Beschreibung der Interferenzsituation konsistent sind, was wiederum Kommunikation zwischen den beteiligten BS erfordert. Einen ganz ähnlichen Ansatz wie in [4] wird auch in [5] verfolgt. Nachteilig ist auch hier die benötigte Kommunikation zwischen den beteiligten Basisstationen.

Der vorliegenden Erfindung liegt daher die Aufgabe zu Grunde, ein Verfahren beziehungsweise ein System vorzuschlagen, das eine effiziente Koordinierung von Interferenzen in einem heterogenen Mobilfunknetz ermöglicht.

<u>Darstellung der Erfindung</u>

Die Aufgabe wird erfindungsgemäß durch ein Verfahren gelöst, wie es im unabhängigen Anspruch 1 definiert ist sowie durch eine Einrichtung, wie sie im unabhängigen Anspruch 15 definiert ist. Vorteilhafte Ausführungsvarianten des erfindungsgemäßen Verfahrens ergeben sich aus den abhängigen Ansprüchen.

Das Wesen der Erfindung besteht im Folgenden: Ein Verfahren zur Zuweisung von Funkressourcen in einem heterogenen Mobilfunknetz umfasst (i) ein Aufteilen von im heterogenen Mobilfunknetz vorhandenen Funkressourcen in eine Mehrzahl von Ressourcenpatterns, wobei die Mehrzahl von Ressourcenpatterns zusammen einen Ressourcenpool bildet; (ii) ein Definieren eines Ressourcensets einer Basisstation des heterogenen Mobilfunknetzes als Untermenge des Ressourcenpools; (iii) ein Bestimmen eines Nutzwertes für jedes Ressourcenpattern des Ressourcensets als Maß eines zu erwartenden Datendurchsatzes des zugehörigen Ressourcenpatterns; (iv) ein Vorauswählen mindestens eines Ressourcenkandidaten aus dem Ressourceset, wobei dazu die Nutzwerte der Ressourcenpatterns des Ressourcensets ausgewertet werden; (v) eine Neuauswahl zu konfigurierender Ressourcenpattern auf der Grundlage des vorausgewählten mindestens einen Ressourcenkandidaten; und (vi) ein Konfigurieren der Basisstation des heterogenen Mobilfunknetzes mit den neu ausgewählten Ressourcenpattern.

Der Begriff "Funkressource" kann sich im Zusammenhang mit der Erfindung auf ein Mittel zum Betreiben beziehungsweise Ermöglichen einer Funkverbindung beziehen, wie insbesondere auf ein Funkfrequenzband oder eines Teiles davon. Unter dem Begriff "Ressourceneinheit" kann der kleinste, noch adressierbare Teil einer Funkressource verstanden werden, der einer Funkverbindung zugewiesen werden kann. Der Begriff "Ressourcenpattern" kann sich auf ein Muster einer Funkressource wie beispielsweise ein Subband beziehen und umfasst jeweils eine ganz bestimmte Kombination von Ressourceneinheiten. Unter dem Begriff "heterogenes Mobilfunknetz" kann hier ein Funknetz der oben beschriebenen Art verstanden werden mit Mobilstationen und Basisstationen, die auf mehreren Hierarchiestufen beziehungsweise Layern organisiert sind.

Das Verfahren kann auf unterschiedliche Arten der Funkressourcenzuweisung angewendet werden und es zeichnet sich entsprechend durch eine verhältnismäßig hohe Flexibilität aus. Insbesondere können dazu die vorhandenen Ressourceneinheiten in die Ressourcenpatterns aufgeteilt werden. Für ein heterogenes Mobilfunknetz basierend auf einer das Orthogonale Frequenzmultiplexverfahren (Orthogonal Frequency-Division Multiplexing (OFDMA)) anwendenden Technologie können die Ressourcenpatterns über physikalische Größen wie Zeit, Frequenz und Sendeleistung definiert werden. Für ein entsprechendes Mobilfunknetz basierend auf einer das Codemultiplexverfahren (Code Division Multiple Access (CDMA)) anwendenden Technologie können die Ressourcenpatterns über physikalische Größen wie Zeit, Code und Sendeleistung definiert werden. Die Gesamtheit aller Ressourcenpatterns bildet den Ressourcenpool. Bei Nutzung von Carrier Aggregation wie oben beschrieben kann sich ein Ressourcenpattern sowohl über einen als auch über mehrere Component Carriers erstrecken.

Die Angaben, die für eine eine Bereitstellung beziehungsweise Ermittlung der im Mobilfunknetz vorhandenen Funkressourcen umfassende Initialisierung des Verfahrens notwendig sind, können entweder vorkonfiguriert oder durch ein der Basisstation beziehungsweise den Basisstationen übergeordnetes Radio Resource Management (RRM) bestimmt werden.

Erfindungsgemäß kann die Entscheidung über die Auswahl des Ressourcenpatterns für die Basisstation beziehungsweise die Ressourcenauswahl in einer Basisstation allein auf dem Nutzwert, wie beispielsweise dem zu erwartenden Datendurchsatz, aller verfügbaren Ressourcenpatterns für diese Basisstation beruhen. Dafür sollte der jeweiligen Basisstation die lokale Interferenzsituation bekannt sein. Diese kann beispielsweise wie unten weiter beschrieben im Downlink mit einem Downlink-Empfänger an der Basisstation gemessen werden. Zusätzlich können auch direkte Messungen der Basisstation und/oder einer oder mehrerer angebundenen beziehungsweise an der Basisstation angemeldete Mobilstationen verwendet werden. Es kann insbesondere vermieden werden, dass zusätzliche Daten von benachbarten Basisstationen benötigt werden, weshalb auf jegliche Kommunikation zwischen den beteiligten Basisstationen verzichtet werden kann.

Somit ermöglicht das erfindungsgemäße Verfahren eine effiziente Koordinierung von Interferenzen im heterogenen Mobilfunknetz.

Vorzugsweise weisen die einzelnen Ressourcenpattern der Mehrzahl von Ressourcenpattern jeweils eine gleiche Bandbreite auf.

Die Nutzwerte der Ressourcenpattern des Ressourcensets entsprechen vorzugsweise jeweils einem mittleren Datendurchsatz des zugehörigen Ressourcenpatterns. Alternativ dazu entsprechen die Nutzwerte der Ressourcenpattern des Ressourcensets vorzugsweise jeweils der mittleren Kanalkapazität des zugehörigen Ressourcenpatterns. Weiter alternativ dazu entsprechen die Nutzwerte der Ressourcenpattern des Ressourcensets insbesondere einem mittleren Verhältnis von Signal zu Interferenz plus Rauschen des zugehörigen Ressourcenpatterns. Das Verhältnis von Signal zu Interferenz plus Rauschen ist auch unter Signal to Interference plus Noise Ratio (SINR) bekannt. Weiter Alternativ dazu entsprechen die Nutzwerte der Ressourcenpattern des Ressourcensets vorzugsweise jeweils einer mittleren Interferenzleistung des zugehörigen Ressourcenpatterns. Wie weiter unten detaillierter beschrieben kann bei kontinuierlicher Nutzung der Ressourcenpattern die Kapazität als Maß für den Datendurchsatz genutzt werden. Bei identischen Bandbreiten kann der SINR verwendet werden und bei identischen (Empfangs- ) Leistungen pro Ressourceneinheit auch die Interferenz.

Vorzugsweise wird zum Bestimmen des Nutzwertes für jedes Ressourcenpattern des Ressourcensets eine Interferenzleistung gemessen.

Vorzugsweise wird das Definieren des Ressourcensets der Basisstation des heterogenen Mobilfunknetzes, das Bestimmen des Nutzwertes für jedes Ressourcenpattern des Ressourcensets, das Vorauswählen des mindestens einen Ressourcenkandidaten, die Neuauswahl der zu konfigurierenden Ressourcenpattern und das Konfigurieren der Basisstation von der Basisstation des heterogenen Mobilfunknetzes ausgeführt. Dies ermöglicht, dass insbesondere die Auswahl von für die Datenübertragung genutzten Ressourcenpatterns dezentral erfolgt, d.h. einzeln in der beziehungsweise in jeder der beteiligten Basisstationen. Dies ermöglicht, dass keine Kooperation zwischen Basisstationen erfolgen muss.

Vorzugsweise wird zum Vorauswählen des mindestens eines Ressourcenkandidaten aus dem Ressourcenset das Ressourcenpattern des Ressourcensets mit dem höchsten oder mit dem tiefsten Nutzwert ausgewählt. Alternativ dazu wird zum Vorauswählen des mindestens eines Ressourcenkandidaten aus dem Ressourcenset einer der Ressourcenpattern des Ressourcensets vorzugsweise zufällig ausgewählt, wobei die Wahrscheinlichkeit dieser Auswahl proportional zum Nutzwert ist.

Vorzugsweise wird eine Initialauswahl von Ressourcenpatterns als Untermenge des Ressourcensets der Basisstation des heterogenen Mobiffunknetzes bestimmt, wobei bei der Neuauswahl der zu konfigurierender Ressourcenpattern auf der Grundlage des vorausgewählten mindestens einen Ressourcenkandidaten die Ressourcenpattern aus den vorausgewählten mindestens einen Ressourcenkandidaten gestrichen werden, die in der Initialauswahl von Ressourcenpatterns vorhanden sind.

Vorzugsweise werden die neu ausgewählten Ressourcenpattern entsprechend ihres jeweils zugehörigen Nutzwerts sortiert. Dabei kann diese Sortierung beispielsweise der Größe nach auf- oder absteigend sein.

Vorzugsweise wird das Konfigurieren der Basisstation des heterogenen Mobilfunknetzes mit den neu ausgewählten Ressourcenpattern periodisch wiederholt. Auch wird das Konfigurieren der Basisstation des heterogenen Mobilfunknetzes mit den neu ausgewählten Ressourcenpattern vorzugsweise synchron mit dem Konfigurieren zumindest einer anderen Basisstation des heterogenen Mobilfunknetzes durchgeführt. Diese periodische und/oder synchrone Auswahl und Konfiguration der Ressourcenpatterns in den Basisstationen für alle beteiligten Basisstationen kann ein verbessertes Konvergenzverhalten und eine höhere Stabilität des Verfahrens ermöglichen. Dies bedeutet real keine Einschränkung für die Anwendbarkeit des Verfahrens. So muss beispielsweise für ein OFDMA-basiertes Mobilfunknetz Zeit- und Frequenzsynchronisation zur Interferenzkoordination stets gefordert werden. Der Zeitpunkt, ab dem die ausgewählten Ressourcenpatterns verwendet werden, kann beispielsweise "low-power" Basisstationen entweder über ein übergeordnetes Radio Resource Management (RRM) oder über Makro-Basisstationen signalisiert werden. Simulationen zeigen, dass das Verfahren über eine ausgezeichnete Stabilität und eine verhältnismäßig schnelle Konvergenz verfügt. Damit kann es sich insbesondere für heterogene Mobilfunknetze mit sehr dynamischen Interferenzsituationen eignen.

Ein weiterer Aspekt der Erfindung betrifft eine Einrichtung zur Zuweisung von Funkressourcen in einem heterogenen Mobilfunknetz, wobei die Einrichtung mindestens eine Basisstation eines übergeordneten Layers des heterogenen Mobilfunknetzes und mindestens eine Basisstation eines untergeordneten Layers des heterogenen Mobilfunknetzes umfasst, wobei die Basisstation des untergeordneten Layers des heterogenen Mobilfunknetzes dazu ausgestaltet ist, das Verfahren gemäß einem der vorangehenden Ansprüche auszuführen. Mit einer solchen Einrichtung kann das erfindungsgemäße Verfahren und seine vorteilhaften Effekte effizient implementiert werden. Auf diese Weise (Makro-HBS) kann das Verfahren ausschließlich im unteren Layer (HBS) implementiert werden Alternativ dazu können auch weitere Anwendungsfälle implementiert sein (z.B. Makro- Pico- HBS), wo auch in Makro oder Pico Basisstationen das erfindungsgemäße Verfahren implementiert sein könnte.

Kurze Beschreibung der Zeichnungen

Im Folgenden wird das erfindungsgemäße Verfahren und die erfindungsgemäße Einrichtung unter Bezugnahme auf die beigefügten Zeichnungen anhand von Ausführungsbeispielen detaillierter beschrieben. Es zeigen:

Fig. 1     eine schematische Ansicht einer Aufteilung des Funkspektrums in Subbänder (Ressourcenpattern) eines ersten Ausführungsbeispiels der Erfindung;

Fig. 2     eine schematische Abfolge des Ausführungsbeispiels von Fig. 1;

Fig. 3     eine schematische Ansicht eines Modells eines heterogenen Mobilfunknetzes eines zweiten Ausführungsbeispiels als Konkretisierung des ersten Ausführungsbeispiels der Erfindung;

Fig. 4     eine schematische Ansicht eines "Dual Stripe" -Modells des Ausführungsbeispiels von Fig. 3;

Fig. 5     eine grafische Darstellung von Simulationsergebnissen ohne das erfindungsgemäße Verfahren;

Fig. 6     eine grafische Darstellung von Simulationsergebnissen mit dem erfindungsgemäßen Verfahren des Ausführungsbeispiels von Fig. 3 bei Verwendung von $D_i$ = 1 Subband; und

Fig. 7     eine grafische Darstellung von Simulationsergebnissen mit dem erfindungsgemäßen Verfahren des Ausführungsbeispiels von Fig. 3 bei Verwendung von $D_i$ = 3 Subbänder.

Weg(e) zur Ausführung der Erfindung

Im Folgenden wird das Prinzip des erfindungsgemäßen Verfahren an Hand eines Beispiels der Frequenzkoordination für den Downlink in einem heterogenen auf orthogonalem Frequenzmultiplexing (OFDMA) basierenden Mobilfunknetz gezeigt, wobei das Mobilfunknetz ein Makro- und ein Femto- Layer (HBS- Layer) umfasst.

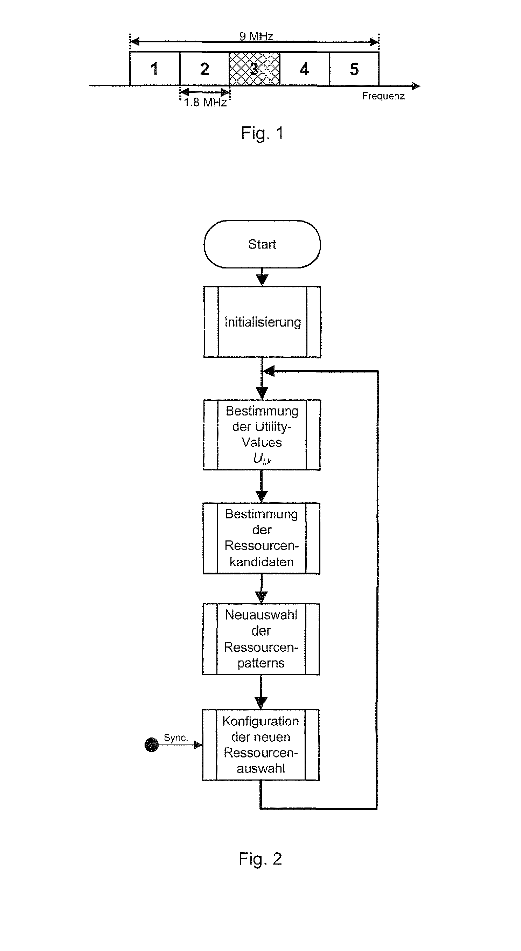

Das zur Verfügung stehende Funkspektrum beziehungsweise Spektrum wird, wie in Fig. 1 dargestellt, in $M$=5 Subbänder unterteilt. Alle Subbänder können kontinuierlich genutzt werden. Die spektrale Sendeleitungsdichte ist für alle Subbänder identisch. Jedes Subband entspricht einem Ressourcenpattern. Die Gesamtheit aller $M$ Subbänder bildet einen Ressourcenpool.

In diesem Beispiel sind alle Subbänder gleich groß. Es wären jedoch auch variable Bandbreiten ebenso möglich.

Jede Makro-Basisstation (MBS) erhält zur Datenübertragung das gesamte Spektrum und kann folglich über den gesamten Ressourcenpool gleichzeitig verfügen. Dadurch ist sichergestellt, dass eine MBS keine Reduktion der Bandbreite erfährt, wenn nur wenige oder auch nur eine einzige Heimbasisstation in ihrem Versorgungsgebiet aktiv ist. Subband 3 beziehungsweise Ressourcenpattern 3 wird exklusiv den MBS zugeordnet. Keine HBS kann über dieses Subband übertragen. Damit soll es jeder Mobilstation (MS) ermöglicht werden, sich mit dem höchsten Layer, dem Makrolayer, dem auch die Makro-Basisstationen zuzuordnen sind, zu verbinden.

Die restlichen Subbänder, also die Ressourcenpattern 1, 2, 4 und 5, können sowohl von den HBS als auch von den MBS verwendet werden. Damit ist die maximale Anzahl der Subbänder für eine HBS mit Index $i$ auf $1 \leq D_i \leq M-1$ begrenzt. Alle HBS besitzen ein identisches Ressourceset $R_i$ mit $R_i = R = \{1, 2, 4, 5\}$.

Das Verfahren zur Auswahl der Ressourcenpatterns basiert auf der Spieltheorie, ähnlich dem Interferenzreduktionsansatz wie in [6] beschrieben. Die beteiligten Basisstationen (BS) stellen die Spieler dar. Die Ressourcenentscheidungen der BS repräsentieren die einzelnen Spielzüge der Spieler. Der Ausgang einer Spielrunde wird von jeder BS individuell anhand von Nutzwerten, den so genannten Utility Values, für die ausgewählten Ressourcenpatterns beurteilt. Die Beobachtung auch der nicht genutzten Ressourcenpatterns und die Bestimmung deren Nutzwerte dient der Vorbereitung der nächsten Ressourcenauswahl in der folgenden Spielrunde. Eine Basisstation nimmt solange am Spiel teil, wie sie sich in Betrieb befindet. Damit kann sie jederzeit auf sich ändernde Interferenzsituationen reagieren.

Da die Spielzüge der BS gleichzeitig und unabhängig von einander erfolgen, kann das Spiel der Ressourcenauswahl als simultanes, nicht-kooperatives Spiel klassifiziert werden.

Da im gezeigten Beispiel jede MBS über alle Ressourcenpattern verfügt, erübrigt sich die Entscheidung über ihre Ressourcenauswahl und damit die Teilnahme aller MBS am Spiel. Demgegenüber nehmen alle HBS am Spiel teil, weshalb das Verfahren zur Ressourcenauswahl im gegebenen Beispiel der Frequenzkoordination nur in den HBS angewendet werden muss.

Im Folgenden wird nun das in Fig. 2 dargestellte Wirkprinzip schrittweise näher erläutert. Dabei bezeichnet der Index $i$ die BS, in der das Verfahren angewendet wird.

1. Initialisierung - Zu Beginn des Verfahrens müssen in der Basisstation $i$ folgende Parameter und Definitionen zur Verfügung stehen:

a. Definition des Ressourcenset $R_i$ als Untermenge des Ressourcenpools $R_{Pool}$, der Menge der $M$ mögilchen Ressourcenpatterns: $R_i \subseteq R_{Pool}$ und $N \leq M$ mit $N = \#R_i$ und $M = \#R_{Pool}$. Dabei bezeichnet das vorgestellte Doppelkreuz $\#$ die Mächtigkeit oder die Anzahl an Ressourcenpatterns eines Ressourcenset.

b. Die Anzahl an Ressourcenpatterns $D_i$, die die BS zur Datenübertragung nutzen darf: $D_i \leq N \leq M$.

c. Die anfängliche Ressourcenauswahl $S_i$ mit insgesamt $D_i$ Ressourcenpatterns: $S_i \subseteq R_i$. Diese kann zufällig erzeugt, extern vorgegeben oder identisch zu der letzten, vor dem Abschalten der BS ermittelten Ressourcenauswahl $S_i$ sein.

Werden alle $M$ Ressourcenpatterns des Ressourcenpools zugeordnet, d.h. $D_i = M = \#R_{Pool}$, folgt daraus unmittelbar $S_i = R_{Pool}$. Eine weitere Adaption der Ressourcenauswahl erübrigt sich. Die Ressourcenauswahl $S_i$ kann sofort konfiguriert werden.

Alle Angaben zur Initialisierung können entweder vorkonfiguriert oder durch ein der Basisstation übergeordnetes Radio Resource Management (RRM) bestimmt werden.

2. Bestimmung der Nutzwerte beziehungsweise Utility-Values $U_{i,k}$ für alle Ressourcenpattern $k \in R_i$:

Der Nutzwert oder Utility-Value $U_{i,k}$ ist ein Maß für den im Mittel zu erwartenden Datendurchsatz des Ressourcenpatterns $k$. Bezeichnet RE die kleinste Ressourceneinheit und $n_{RE}$ deren Anzahl innerhalb des Ressourcenpatterns k, so kann die Utility-Funktion wie folgt angegeben werden:

$$U_{i,k} = n_{RE} \cdot E\{U_{I,RE}|RE \in k\} = n_{RE} \cdot \overline{U}_{i,RE \in k} \qquad (1)$$

Diese Formel 1 bezieht sich auf einen Utility-Value $U_{i,k}$ des Ressourcenpatterns $k$ für die Basisstation $i$

Dabei bezeichnet $E\{\}$ den Erwartungswert und $U_{i,RE}$ den Nutzwert einer Ressourceneinheit RE. In Abhängigkeit von den gewählten Ressourcenpattern und von der Komplexität der Implementierung lassen sich unterschiedliche Definitionen für den Nutzwert finden. Im Folgenden werden einige Beispiele dafür angegeben:

a. Kanalkapazität (C)- Der mittlere Nutzwert einer Ressourceneinheit RE $\overline{U}_{i,RE \in k}$ entspricht bei kontinuierlicher Nutzung ihrer mittleren Kanalkapazität. Er ist von den Statistiken des Übertragungskanals und der Interferenzstörung abhängig. Sind diese bekannt, lässt sich ein äquivalenter additives- weißes- gaußsches- Rauschen (Additive White Gaussian Noise (AWGN) )- Kanal mit identischer Kanalkapazität $C_{i,RE \in k}$ berechnen:

$$\overline{U}_{i,RE \in k} = C_{i,RE \in k} = B_{i,RE \in k} \cdot \log_2(1 + SINR_{eff}) \quad \text{in bps} \qquad (2)$$

Diese Formel 2 bezieht sich auf einen Utility- Value einer Ressourceneinheit RE als Funktion der Kanalkapazität. Dabei bezeichnet $B_{i,RE \in k}$ die Bandbreite einer Ressourceneinheit (RE) und $SINR_{eff}$ das effektive Signal- to-Interference- plus- Noise Ratio (SINR) des äquivalenten AWGN- Kanals.

b. Signal- to- Interference- plus- Noise Ratio (SINR)- Der mittlere SINR pro RE lässt sich als Funktion der mittleren Empfangsleistung $S$, der mittleren Interferenzleistung $I$ und der Rauschleistung $N$ wie folgt angeben:

$$\overline{U}_{i,RE \in k} = 10 \cdot \log_{10}(S/(I + N)) \quad \text{in dB} \qquad (3)$$

Diese Formel 3 bezieht sich auf einen Utility- Value einer Ressourceneinheit (RE) als Funktion des SINR

Es wird hierbei vorausgesetzt, dass die Bandbreite einer Ressourceneinheit RE $B_{i,RE \in k}$ für alle Ressourcenpattern identisch ist.

c. Mittlere Interferenzleistung -Ist die mittlere Empfangsleistung für alle RE aller Ressourcenpattern $k$ identisch, lässt sich Formel 3 unter der Annahme $I >> N$ weiter vereinfachen zu:

$$\overline{U}_{i,RE \in k} = -10 \cdot \log_{10}(I) \quad \text{in dB} \tag{4}$$

Diese Formel 4 bezieht sich auf einen Utility-Value einer Ressourceneinheit (RE) als Funktion der mittleren Interferenzleistung $I$

Für alle aufgeführten Definitionen des mittieren Nutzwertes einer Ressourceneinheit RE $\overline{U}_{i,RE \in k}$ nach Formel 2 bis Formel 4 muss der Basisstation die lokale Interferenzsituation bekannt sein. Im Downlink kann die Messung der Interferenzleistungen mit Hilfe eines Downlink-Empfängers an der Basisstation erfolgen. Zusätzlich besteht auch die Möglichkeit direkte Messungen der Basisstation und der angebundenen Mobilstationen zu verwenden. Die Messungen erfolgen kontinuierlich und die Utility-Values werden vor der Bestimmung der Ressourcenkandidaten (Schritt 3) aktualisiert. Liegen keine oder nur eine ungenügende Anzahl von Messungen vor, die keine hinreichende Genauigkeit der Berechnung der Utility-Values zulassen, verweilt das Verfahren solange in Schritt 2.

3. Bestimmung beziehungsweise Vorauswählen der Ressourcenkandidaten

Die Bestimmung der Ressourcenkandidaten $cand \subseteq R_i$ entspricht einer Vorauswahl der Ressourcenpattern, die sich für eine Neuauswahl eignen. Diese Vorauswahl wird anhand der zuvor bestimmen Utility-Values $U_{i,k}$ für alle $k \in R_i$ vorgenommen. Zwei alternative Methoden stehen zur Verfügung:

a. Highest Utility-Values - Es werden aus den zur Verfügung stehenden $N = \#R_i$ Ressourcenpattern genau $D_i$ als mögliche Kandidaten ausgewählt, die die höchsten Utility-Values besitzen.

$$U_{i,k \in cand} \geq U_{i,k \in R_i \setminus cand} \quad \text{mit} \quad D_i = \#cand \tag{5}$$

Diese Formel 5 bezieht sich auf eine "Highest Utility-Values"-Bedingung.

b. Random Preselection - Nacheinander werden die $D_i$ Kandidaten dadurch bestimmt, indem jeweils ein Ressourcenpattern beziehungsweise Pattern aus den noch nicht selektierten Ressourcenpattern beziehungsweise Pattern zufällig ausgewählt wird. Die Wahrscheinlichkeit eines Pattern k ausgewählt zu werden ist proportional zu seinem Utility-Value $U_{i,k}$:

$$\Pr\{k | k \in R_i \setminus cand\} = U_{i,k} \bigg/ \sum_{l \in R_i \setminus cand} U_{i,l} \tag{6}$$

Diese Formel 6 bezieht sich auf eine Wahrscheinlichkeit der Vorauswahl eines Pattern k.

4. Neuauswahl der Ressourcenpattern:

Zuerst wird die Liste der Kandidaten $cand$ um die Kandidaten bereinigt, die sich auch in der aktuellen Ressourcenauswahl $S_i$ befinden.

$$cand^* = cand \setminus S_i \tag{7}$$

Diese Formel 7 bezieht sich auf eine bereinigte Liste der Kandidaten

Ist die bereinigte Liste der Kandidaten leer, folgt daraus, dass die Neuauswahl der Ressourcenpattern $NewS_i$ gleich der aktuellen Auswahl ist.

$$NewS_i = S_i \big| cand^* = \varnothing \qquad\qquad (8)$$

Diese Formel 8 bezieht sich auf eine Ressourcenauswahl bei leerer bereinigte Liste der Kandidaten Anderenfalls werden die bereinigte Liste der Kandidaten $cand^*$ und die Liste der Ressourcenauswahl $S_i$ entsprechend ihrer Utility-Values absteigend sortiert.

Danach wird das erste Pattern der Ressourcenauswahl reihum mit den Pattern der bereinigten Liste der Kandidaten $cand^*$ verglichen. Besitzt ein Kandidat einen höheren Utility-Value, wird dieses Pattern mit einer Wahrscheinlichkeit $p$ in die Liste der neuausgewählten Ressourcen übernommen und aus der Liste $cand^*$ gestrichen. Andernfalls wird der Vergleich mit dem nächsten Kandidaten fortgesetzt. Wurde kein Kandidat übernommen, wird das erste Pattern der Ressourcenauswahl übernommen. Danach wird das nächste Pattern der Ressourcenauswahl in gleicher Weise überprüft. Sind alle $D_i$ Pattern der aktuellen Ressourcenauswahl $S_i$ überprüft worden, sind auch alle Pattern der Neuauswahl $NewS_i$ damit bestimmt worden.

Die Neuauswahl der Ressourcenpatterns sollte unmittelbar vor dem Zeitpunkt der Konfiguration der Neuauswahl stattfinden, um die aktuelle Interferenzsituation möglichst genau berücksichtigen zu können. Falls neue Pattern ausgewählt werden ($NewS_i \neq S_i$), müssen eventuelle systembedingte Verzögerungen beim Timing der Neuauswahl der Ressourcenpattern berücksichtigt werden. So erfolgt zumeist eine Ressourcenbelegung durch eine MS im Uplink zeitlich verzögert gegenüber der Ressourcenzuweisung durch die BS.

5. Konfiguration der neuen Ressourcenauswahl $NewS_i$:

Die Konfiguration der Neuauswahl der Ressourcenpattern sollte periodisch und vorzugsweise synchron für alle beteiligten Basisstationen erfolgen. Der Zeitpunkt, ab dem die neu ausgewählten Ressourcenpatterns verwendet werden, kann entweder über ein übergeordnetes RRM oder über die Makro-Basisstationen signalisiert werden. Es gilt dann: $S_i = NewS_i$.

Die Periodendauer für die Konfiguration der Neuauswahl sollte gerade so groß gewählt werden, dass eine hinreichende Genauigkeit der Berechnung der Utility-Values gegeben ist. Dies ist ebenfalls zu beachten, falls ein übergeordnetes RRM den Ressourcenpool oder auch nur die verfügbaren Patterns $R_i$ während des Betriebs der Basisstation $i$ ändert. Eventuell muss die Konfiguration der Neuauswahl dann entsprechend durch das RRM verzögert werden.

Solange noch keine Neuauswahl der Ressourcen erfolgen konnte (s.a. Schritt 2), sollte die Basisstation nicht in Betrieb gehen.

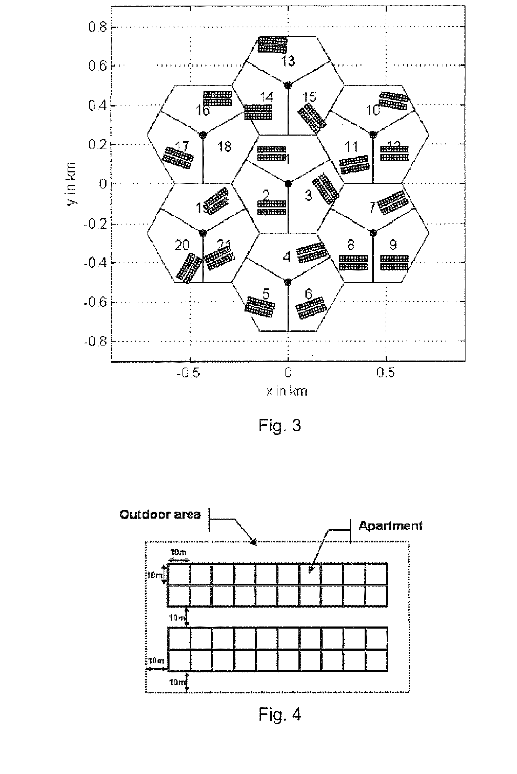

Im Folgenden wird an Hand der Fig. 3 bis Fig. 7 ein weiteres Ausführungsbeispiel der Erfindung beschrieben. Dabei zeigen System-Level Simulationen eines heterogenen Mobilfunknetzes, bestehend aus einem Makro- und einem HBS-Layer, die Anwendbarkeit des beschriebenen, nicht kooperativen erfindungsgemäßen Verfahrens zur Interferenzkoordination.

Das Mobilfunknetz basiert auf der 3GPP-Spezifikation LTE (Long-Term Evolution). Die Interferenzkoordination erfolgt ausschließlich im Frequenzbereich nach Fig. 1. Der mittlere Nutzwert (Utility Value) einer Ressourceneinheit (RE) wird als Funktion der Interferenz berechnet. Als Kandidaten für eine mögliche Neuauswahl der Ressourcen werden die Patterns mit den jeweils höchsten Utility Values bestimmt. Ein Kandidat wird in die Liste der neuausgewählten Ressourcen mit einer Wahrscheinlichkeit von p = 10% übernommen.

Fig. 3 zeigt das simulierte Mobilfunknetz mit 21 Makrobasisstationen (MBS). Jeder der eingezeichneten Sektoren besitzt genau eine MBS. Innerhalb eines jeden Sektors sind zwei parallel zueinander stehende Appartementhäuser nach dem so genannten "Dual Stripe"-Modell wie in [7] beschrieben zufällig positioniert.

Die Anordnung und die Größe der Apartments im "Dual Stripe"-Modell ist in Fig. 4 dargestellt. Verfügt jedes der Apartmenthäuser über sechs Etagen und sind in 5% der Apartments aktive HBS anzufinden, befinden sich 12 aktive HBS innerhalb eines Sektors.

Alle Mobilstationen einer HBS (MS@HBS) befinden sich für die Simulation im selben Apartment wie die dazugehörige HBS. Die Mobilstationen einer MBS (MS@MBS), die sich innerhalb eines Gebäudes befinden (Indoor MS), werden auf alle Apartments gleichmäßig verteilt. Mobilstationen einer MBS (Outdoor MS@MBS), die sich außerhalb der Gebäude befinden, werden gleichmäßig über das Versorgungsgebiet verteilt. Für alle Mobilstationen ist es untersagt, den Layer zu wechseln, d.h. von einer MBS zu einer HBS und auch in umgekehrter Richtung.

Simuliert wird der Downlink für eine urbane Umgebung bei einer Trägerfrequenz $f_c$ = 2GHz. Mittels "Wraparound"-Simulationstechnik werden Verfälschungen durch fehlende Interferenz am Rande des Versorgungsgebietes vermieden.

Schlüsselindikatoren für das Leistungsvermögen eines Mobilfunknetzes sind Datendurchsatz (Throughput) und Ausfallwahrscheinlichkeit (Outage Probability) einer Mobilstation bzw. eines Nutzers. Dabei gilt es die unterschiedlichen Anforderungen für die diversen Nutzergruppen (MS@HBS, outdoor und indoor MS@MBS) zu beachten. So wird im Nachfolgenden eine Verbindung als ausgefallen eingestuft, wenn der Durchsatz für Makronutzer (MS@MBS) kleiner 100kbit/s und für Heimnutzer (MS@HBS) kleiner 1Mbit/s ist.

In den nachfolgend beschriebenen Ergebnisdarstellungen werden der mittlere Datendurchsatz, der Durchsatz der Zellrandnutzer und die Ausfallwahrscheinlichkeit getrennt für alle Nutzergruppen dargestellt. Für den Durchsatz der Zellrandnutzer wird das 5. Perzentil der zugehörigen Durchsatzverteilung angegeben. Die Durchsätze für Heim- und Makronutzer sind unterschiedlich skaliert.

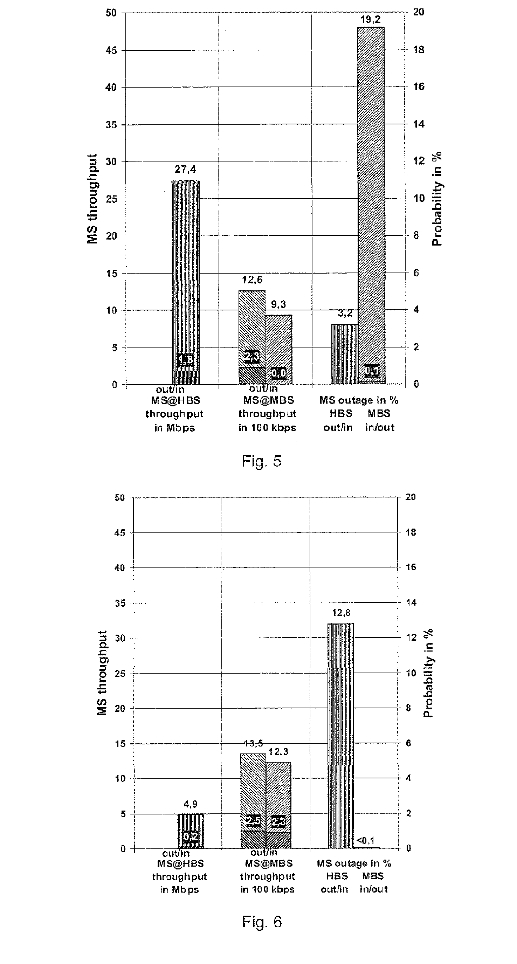

Fig. 5 zeigt die Simulationsergebnisse ohne Interferenzkoordination. Für die Makronutzer innerhalb von Gebäuden (Indoor MS@MBS) ergibt sich eine nicht akzeptable Ausfallwahrscheinlichkeit von 19,2%. Grund dafür ist die sehr hohe Interferenzstörung durch benachbarte HBS. Im Vergleich dazu ist die Performance der Heimnutzer mit einem mittleren Datendurchsatz von 27,4Mbit/s extrem gut. Auch für die Zellrandnutzer im Heimbereich liegt der Datendurchsatz mit knapp 1,8Mbit/s noch deutlich über dem Minimalwert von 1Mbit/s.

Verwendet man nun das vorgestellte Verfahren mit nur einem Subband ($D_i$ = 1) ergibt sich eine deutliche Verbesserung der Situation der Indoor-Makronutzer, wie in Fig. 6 gezeigt ist. Ihre Ausfallwahrscheinlichkeit reduziert sich fast zu null. Auch der mittlere Datendurchsatz und der 5% Perzentilwert liegen nun annähernd auf dem gleichen Niveau wie für die Outdoor-Makronutzer. Dagegen ist der mittlere Datendurchsatz eines Heimnutzers um mehr als 80% zurückgegangen. Der Datendurchsatz der Zellrandnutzer unten den Heimnutzern liegt nun deutlich unterhalb der geforderten 1Mbit/s. Insgesamt gelten 12,8% der Heimnutzer als nicht mehr versorgt.

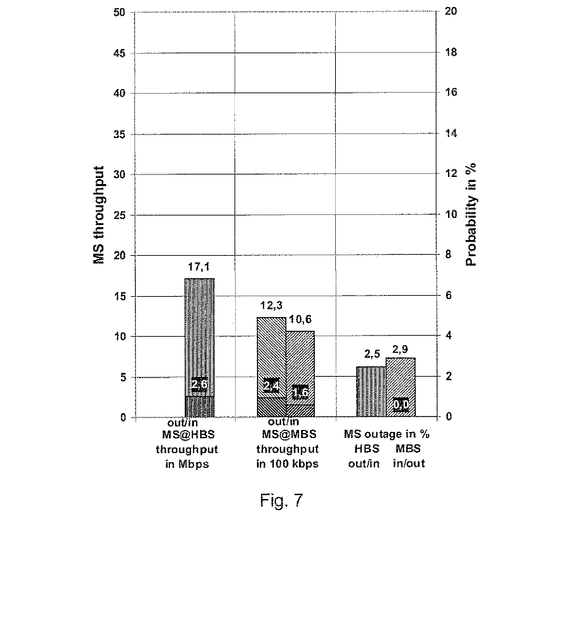

Durch die Erhöhung der Anzahl an Subbändern (Pattern) auf $D_i$ = 3 ist ein guter Kompromiss zwischen der Performance von Indoor-Makronutzern und Heimnutzern gefunden worden, wie in Fig. 7 zu sehen ist. Sowohl der mittlere Datendurchsatz als auch der am Zellrand verringern sich für Makronutzer gegenüber dem Fall $D_i$ = 1 nur moderat. Die Ausfallwahrscheinlichkeit für beide Indoor-Nutzergruppen ist nun nahezu identisch.

Der mittlere Datendurchsatz der Heimnutzer wächst überproportional zu der Anzahl der Subbänder von 4,9Mbit/s auf 17,1Mbit/s an. Am Zellrand steigt der Datendurchsatz noch deutlicher auf 2,6Mbit/s, was selbst für den Fall ohne Interferenzkoordination eine Erhöhung des Datensatzes um mehr als 40% bedeutet.

Damit konnte nachgewiesen werden, dass das Verfahren in der Lage ist, in einem heterogenen Mobilfunknetz gezielt Interferenzen an den Zellrändern zu vermeiden und im Mittel hohe Datenraten in allen Layern zu ermöglichen.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solche, die zusätzliche andere Merkmale umfassen.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Ein Computerprogramm kann auf einem geeigneten Medium gespeichert sein und/oder vertrieben werden, wie beispielsweise auf einem optischen Speichermedium oder einem Festmedium, das zusammen mit oder als Teil von anderer Hardware bereitgestellt wird. Es kann auch in anderer Form vertrieben werden, wie beispielsweise über das Internet oder andere verkabelte oder unverkabelte Telekommunikationssysteme. Insbesondere kann ein Computerprogramm beispielsweise ein auf einem computerlesbaren Medium gespeichertes Computerprogrammprodukt sein, das dazu ausgestaltet ist, ausgeführt zu werden, um ein Verfahren zu implementieren, insbesondere das erfindungsgemäße Verfahren. Alle Bezugszeichen in den Ansprüchen sind nicht als den Umfang der Ansprüche einschränkend zu verstehen.

Referenzen

[1] 3GPP TR 36.814 V9.0.0, "Further Advancements for E-UTRAN Physical Layer Aspects," March 2010.

[2] Y. Bai, "Resource Coordination and Interference Mitigation between Macrocell and Femtocell," in PIMRC, 2009.

[3] Y. Wu, "A Novel Spectrum Arrangement Scheme for Femto Cell Deployment in LTE Macro Cells," in PIMRC, 2009.

[4] L. G. U. Garcia et al., "Autonomous Component Carrier Selection: Interference Management in Local Area Environments for LTE-Advanced," IEEE Communications Magazine, Sep. 2009.

[5] C. Abraham et al., "Method and System for Mitigating Interference among Femtocells via Intelligent Channel Selection," US 2010/0222069, Sep. 2010.

[6] J. Ellenbeck et al., "Decentralized ICIC by autonomous spectral reuse decisions," in Proc. European Wireless Conference, June 2008.

[7] 3GPP R4-092042, "Simulation assumptions and parameters for FDD HeNB RF requirements," May 2009.

**Patentansprüche**

1. Verfahren zur Zuweisung von Funkressourcen in einem heterogenen Mobilfunknetz umfassend:

   Aufteilen von im heterogenen Mobilfunknetz vorhandenen Funkressourcen in eine Mehrzahl von Ressourcenpatterns, wobei die Mehrzahl von Ressourcenpatterns zusammen einen Ressourcenpool bildet;
   Definieren eines Ressourcensets einer Basisstation des heterogenen Mobilfunknetzes als Untermenge des Ressourcenpools;
   Bestimmen eines Nutzwertes für jedes Ressourcenpattern des Ressourcensets als Maß eines zu erwartenden Datendurchsatzes des zugehörigen Ressourcenpatterns;
   Vorauswählen mindestens eines Ressourcenkandidaten aus dem Ressourcenset, wobei dazu die Nutzwerte der Ressourcenpatterns des Ressourcensets ausgewertet werden;
   Neuauswahl zu konfigurierender Ressourcenpattern auf der Grundlage des vorausgewählten mindestens einen Ressourcenkandidaten; und
   Konfigurieren der Basisstation des heterogenen Mobilfunknetzes mit den neu ausgewählten Ressourcenpattern.

2. Verfahren nach Anspruch 1, bei dem die Ressourcenpattern der Mehrzahl von Ressourcenpattern jeweils eine gleiche Bandbreite aufweisen.

3. Verfahren nach Anspruch 1 oder 2, bei dem die Nutzwerte der Ressourcenpattern des Ressourcensets jeweils einem mittleren Datendurchsatz entsprechen.

4. Verfahren nach Anspruch 1 oder 2, bei dem die Nutzwerte der Ressourcenpattern des Ressourcensets jeweils einem mittleren Verhältnis von Signal zu Interferenz plus Rauschen des zugehörigen Ressourcenpatterns entsprechen.

5. Verfahren nach Anspruch 1 oder 2, bei dem die Nutzwerte der Ressourcenpattern des Ressourcensets jeweils einer mittleren Kanalkapazität des zugehörigen Ressourcenpatterns entsprechen.

6. Verfahren nach Anspruch 1 oder 2, bei dem die Nutzwerte der Ressourcenpattern des Ressourcensets jeweils einer mittleren Interferenzleistung des zugehörigen Ressourcenpatterns entsprechen.

7. Verfahren nach einem der vorangehenden Ansprüche, bei dem zum Bestimmen des Nutzwertes für jedes Ressourcenpattern des Ressourcensets eine Interferenzleistung gemessen wird.

8. Verfahren nach einem der vorangehenden Ansprüche bei dem das Definieren des Ressourcensets der Basisstation des heterogenen Mobilfunknetzes, das Bestimmen des Nutzwertes für jedes Ressourcenpattern des Ressourcensets, das Vorauswählen des mindestens einen Ressourcenkandidaten, die Neuauswahl der zu konfigurierenden Ressourcenpattern und das Konfigurieren der Basisstation von der Basisstation des heterogenen Mobilfunknetzes ausgeführt wird.

9. Verfahren nach einem der vorangehenden Ansprüche, bei dem zum Vorauswählen des mindestens einen Ressourcenkandidaten aus dem Ressourcenset das Ressourcenpattern des Ressourcensets mit dem höchsten oder mit dem tiefsten Nutzwert ausgewählt wird.

10. Verfahren nach einem der Ansprüche 1 bis 7, bei dem zum Vorauswählen des mindestens eines Ressourcenkandidaten aus dem Ressourcenset einer der Ressourcenpattern des Ressourcensets zufällig ausgewählt wird, wobei die Wahrscheinlichkeit dieser Auswahl proportional zum Nutzwert ist.

11. Verfahren nach einem der vorangehenden Ansprüche, bei dem eine Initialauswahl von Ressourcenpatterns als Untermenge des Ressourcensets der Basisstation des heterogenen Mobilfunknetzes bestimmt wird, wobei bei der Neuauswahl der zu konfigurierender Ressourcenpattern auf der Grundlage des vorausgewählten mindestens einen Ressourcenkandidaten die Ressourcenpattern aus den vorausgewählten mindestens einen Ressourcenkandidaten gestrichen werden, die in der Initialauswahl von Ressourcenpatterns vorhanden sind.

12. Verfahren nach einem der vorangehenden Ansprüche, bei dem die neu ausgewählten Ressourcenpattern entsprechend ihres jeweils zugehörigen Nutzwerts sortiert werden.

13. Verfahren nach einem der vorangehenden Ansprüche, bei dem das Konfigurieren der Basisstation des heterogenen Mobilfunknetzes mit den neu ausgewählten Ressourcenpattern periodisch wiederholt wird.

14. Verfahren nach einem der vorangehenden Ansprüche, bei dem das Konfigurieren der Basisstation des heterogenen Mobilfunknetzes mit den neu ausgewählten Ressourcenpattern synchron mit dem Konfigurieren zumindest einer anderen Basisstation des heterogenen Mobilfunknetzes durchgeführt wird.

15. Einrichtung zur Zuweisung von Funkressourcen in einem heterogenen Mobilfunknetz, wobei die Einrichtung mindestens eine Basisstation eines übergeordneten Layers des heterogenen Mobilfunknetzes und mindestens eine Basisstation eines untergeordneten Layers des heterogenen Mobilfunknetzes umfasst, wobei die Basisstation des untergeordneten Layers des heterogenen Mobilfunknetzes dazu ausgestaltet ist, das Verfahren gemäß einem der vorangehenden Ansprüche auszuführen.

Fig. 1

Fig. 2

Fig. 3

Fig. 4

Fig. 5

Fig. 6

Fig. 7

Europäisches Patentamt
European Patent Office
Office européen des brevets

## EUROPÄISCHER RECHERCHENBERICHT

Nummer der Anmeldung

EP 12 15 9839

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | NIYATO D ET AL: "A Noncooperative Game-Theoretic Framework for Radio Resource Management in 4G Heterogeneous Wireless Access Networks", IEEE TRANSACTIONS ON MOBILE COMPUTING, IEEE SERVICE CENTER, LOS ALAMITOS, CA, US, Bd. 7, Nr. 3, 1. März 2008 (2008-03-01), Seiten 332-345, XP011335217, ISSN: 1536-1233, DOI: 10.1109/TMC.2007.70727 * Absatz [0001] * * Absatz [0005] * ----- | 1-15 | INV. H04W16/14 H04W16/16 H04W16/20 |
| X | JAN ELLENBECK ET AL: "Performance of Decentralized Interference Coordination in the LTE Uplink", 20. September 2009 (2009-09-20), VEHICULAR TECHNOLOGY CONFERENCE FALL (VTC 2009-FALL), 2009 IEEE 70TH, IEEE, PISCATAWAY, NJ, USA, PAGE(S) 1 - 5, XP031600189, ISBN: 978-1-4244-2514-3 * Absatz [0002] * * Absatz [0003] * ----- | 1-15 | RECHERCHIERTE SACHGEBIETE (IPC) H04W |

Der vorliegende Recherchenbericht wurde für alle Patentansprüche erstellt

| Recherchenort | Abschlußdatum der Recherche | Prüfer |
|---|---|---|
| Berlin | 29. August 2012 | Rothlübbers, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................

& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100222069 A

**In der Beschreibung aufgeführte Nicht-Patentliteratur**

- Further Advancements for E-UTRAN Physical Layer Aspects. *3GPP TR 36.814 V9.0.0,* Marz 2010
- **Y. BAI.** Resource Coordination and Interference Mitigation between Macrocell and Femtocell. *PIMRC,* 2009
- **Y. WU.** A Novel Spectrum Arrangement Scheme for Femto Cell Deployment in LTE Macro Cells. *PIMRC,* 2009
- **L. G. U. GARCIA et al.** Autonomous Component Carrier Selection: Interference Management in Local Area Environments for LTE-Advanced. *IEEE Communications Magazine,* September 2009
- **J. ELLENBECK et al.** Decentralized ICIC by autonomous spectral reuse decisions. *Proc. European Wireless Conference,* Juni 2008
- Simulation assumptions and parameters for FDD HeNB RF requirements. *3GPP R4-092042,* Marz 2009